# EUROPEAN PATENT APPLICATION

(11) **EP 4 501 817 A1**
(43) Date of publication of application: **05.02.2025**
(21) Application number: 23774052.7
(22) Date of filing: 27.02.2023
(51) Int. Cl.: B65G 1/137, G06Q 10/08

(54) **PACKING STATION**

(30) Priority: 25.03.2022 ES 202230508 U
(71) Applicant: Rielec Automatizacion Industrial, S.L., 46870 Ontinyent (Valencia) (ES)
(72) Inventor: RIUS PASCUAL, Luis, 46870 Ontinyent Valencia (ES)
(74) Representative: Ungria López, Javier
(86) International application number: PCT/ES2023/070106
(87) International publication number: WO 2023/180594

(57) **Abstract**

The subject matter of the present invention falls within the technical field of packing stations. More specifically, the present invention relates to a packing station comprising an integrated RFID system for real time monitoring of the packed articles, contrasting each individual article being packed with the theoretical listing of the current order, warning the operator in the event that an article is incorrect, there is an unexpected article or there is an excessive number of articles.

## Description

### OBJECT OF THE INVENTION

The object of the present invention falls within the technical field of packing stations and more specifically discloses a packing station comprising a series of antennas for reading and encoding RFID tags that enables real-time monitoring of the items that are being packed to be performed.

### TECHNICAL PROBLEM TO BE SOLVED AND BACKGROUND OF THE INVENTION

A packing station is an installation, generally included in a packing chain, configured so that an operator fills a box or similar element with at least one product.

In packing stations, an operator is arranged, generally standing although in some cases he or she could be sitting, in a specific position to which a box that must be filled arrives. In other possible embodiments, the operator already has the box to fill and what he or she receives are different products to be packed. A problem that widely occurs in packing stations is that operators acquire poor body positions, which have an impact on the speed at which they perform their work and, in some cases, cause pain due to poor postural hygiene. This pain can later lead to medical sick leave, which further affects packing times and costs. In companies where packing is done in a timely manner or with few products, this may not be a problem, but in companies dedicated to logistics, for example, these problems lead to high costs.

Moreover, in many cases, the operators who are responsible for performing the packing are given many different tasks, with different types of products associated with different boxes (for example, when a shipment is made from an online clothing store). In some cases, it is easy for the operator to mix different orders and this causes the final boxes to contain products that do not correspond to what the user had purchased.

### DESCRIPTION OF THE INVENTION

The invention relates to a packing station, which is preferably used in manual packing processes, and comprising an integrated RFID system for real-time monitoring of the packed items. The system compares each individual item that is being packed to the theoretical list of the order in progress, warning the operator, for example in an acoustic-audible manner, in the event that an item is erroneous, there is an unexpected item or there is an excessive amount of items.

The key to the proposed packing station is that it enables the box to be placed in an ergonomic position for the operator and, in said position, the non-reading areas of the RFID tags of the items are significantly reduced and also external readings are reduced, thereby increasing the reliability of said readings.

The packing station comprises a support on which a base is mounted that swivels about a horizontal axis and that is configured to receive a box to be packed/unpacked. Due to the swivelling movement, the base is lifted at one of the ends thereof to tilt the box and orient it towards the operator so that he or she can work more comfortably. The station also comprises a metal front wall and metal lateral walls between which a reading area is generated where the base is located and which is where the box will be placed during packing and during tag reading operations. The walls extend at the top, in a vertical direction, from the support.

Likewise, to ensure that the signals are confined to the reading area, the station has lateral extensions that extend from an upper end of the lateral walls towards the reading area and a front extension that extends from an upper end of the front wall towards said reading area. It also comprises shielding means, to complete the function of confining the signals to the reading area. Said shielding means are arranged in an upper section of the front wall and of the lateral walls, to enable the necessary bounces of the signal and the correct reading thereof to occur in the lower section and to prevent the signals from escaping through the upper portion which is exposed.

To read the tags, the structure comprises antennas arranged on the support, vertically oriented (Z axis), in correspondence with the front wall and with the lateral walls. Said antennas preferably work at a power of 21 dB.

If the antennas are arranged on the lateral walls of the station at a height in correspondence with the reading area, i.e., where the box is placed, no apparent results are obtained. In addition, the non-reading area near the lateral walls increases, so the power of the antennas must be increased to cover that area and therefore the risk of external readings greatly increases.

Furthermore, if the antennas are placed in the reading area, in the central portion of said reading area or close to the front wall and focused upwards, the external reading area also increases significantly, seriously increasing the external readings in the area where the operator is located.

If the antennas are arranged on the support but tilted at a certain angle towards the reading area, said reading area is enlarged in the direction of the outlet of the packing station (the area opposite to where the user is placed, where there is no wall). This increases the risk that the RF waves that are emitted by the antennas will reflect in said area and produce unwanted readings.

The key is to provide a balance between optimal reading area, which allows various tag orientations to be detected, while avoiding readings in the external area of the packing area (i.e., where the box is located) or at least that the reading area is as limited as possible.

### BRIEF DESCRIPTION OF THE FIGURES

To complete the description, and for the purpose of helping to make the features of the invention more readily understandable, this description is accompanied by a set of drawings constituting an integral part of the same, which by way of illustration and not limitation represents the following:
Figure 1 represents a perspective view of a packing station.
Figure 2 represents a lateral view of a packing station.
Figure 3 represents a rear view of a packing station.
Figure 4 shows a schematic view of an exemplary embodiment of the packing station of the invention with the corresponding antennas of the RFID system.

### DETAILED DESCRIPTION

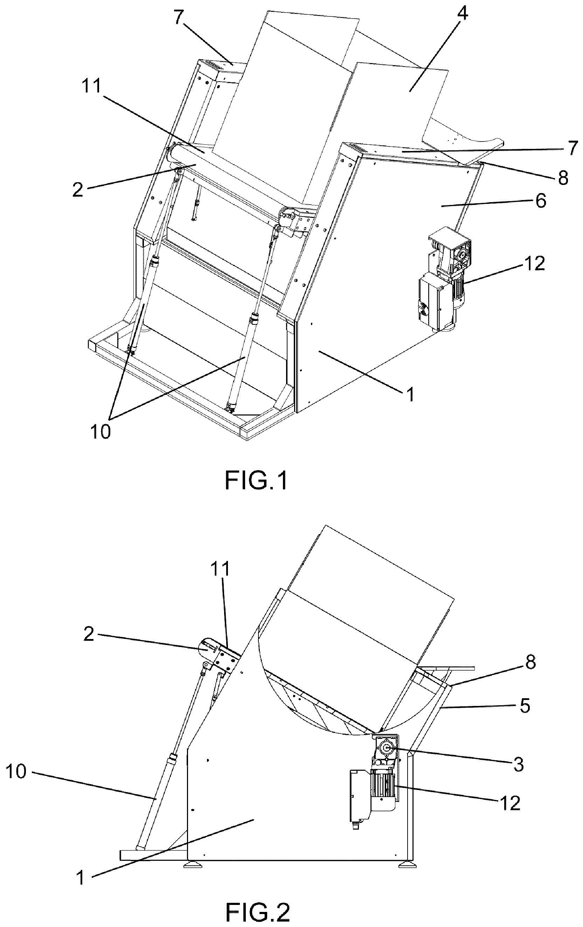

Figure 1 shows a perspective view of the packing station. The key to this packing station is that it enables the tilting of a base (2) on which the box (4) to be packed/unpacked is arranged, in order to tilt it towards the operator responsible for performing said task and thus improve their comfort and postural health.

The technical problem that arises when tilting the box inside the packing station is that the RFID signals that are used to confirm whether the products that are being packed are the correct ones escape more easily from the reading area (wherein the box is located during the packing/unpacking operation). Additionally, as the operator is handling products inside the reading area (the products to be packed), "shadows" are created, i.e., areas wherein the signals emitted for reading the RFID tags are absorbed. These two conditions can cause errors when reading the tags.

The proposed packing station comprises a support (1) on which a base (2) is mounted, swivelling about a horizontal axis (3), on which a box (4) to be packed/unpacked is arranged. By swivelling the base (2) the opening of the box (4) is oriented towards the operator, thus improving their comfort during working hours.

Likewise, the workstation comprises a front wall (5) and lateral walls (6) between which a reading area is generated where the base (2) is located. When the box (4) is in said reading area (it corresponds to any possible position of the base (2), regardless of the tilt thereof with respect to the horizontal position), the emission of reading signals by antennas (9) and the reading of the RFID tags of the products that are being packed allows determining whether the correct products are being packed or if there is a product that is being placed in the box (4) by mistake.

In an exemplary embodiment of the invention, the workstation comprises two counting antennas, configured for counting the items to be packed. Likewise, an additional antenna or subtraction antenna can be arranged outside the workstation. If the operator makes a mistake and places an erroneous item in the reading area and, upon reading, said error is detected, the operator removes the item and the subtraction antenna, arranged outside the reading station, detects the corresponding tag and discounts it from the set of tags in the reading area, i.e., it discounts the item from the set of packed items.

To prevent erroneous readings, the workstation comprises lateral extensions (7) that extend from an upper end of the lateral walls (6) towards the reading area and a front extension (8) that extends from an upper end of the front wall (5) towards said reading area. Likewise, to read the RFID tags of the items, the workstation comprises antennas (9) arranged on the support (1).

In a preferred embodiment, the antennas (9) are located in the lower area of the support (1), close to the lateral walls (6) and close to the front wall (5), parallel to the Z axis, i.e., they are vertically arranged. In this way, good readings are obtained in the item reading area (where the empty box is located) because the power of the antennas (9) can be increased. In addition, response can be obtained from various tag orientations, since due to the portion of the beam that is reflected in the reading area (at the base (2) and inside the lateral walls (6) and front wall (5)), tags are impinged on at various angles.

In another possible exemplary embodiment, the antennas (9) are vertically oriented, in correspondence with the front wall (5) and with the lateral walls (6), and comprises shielding means for shielding the signal of the antennas (9) arranged in an upper section of the front wall (5) and of the lateral walls (6). The shielding means may comprise a material that absorbs the waves emitted by the antennas (9) to prevent tag readings at points close to the reading area where direct wave figures are detected.

Likewise, in an exemplary embodiment, a low-range antenna (9) can be arranged focused on the area where the operator is located, oriented towards the box (4) located on the base (2) in the reading area. Another option to reduce wave leaks may be to lower the power of the antennas arranged on the support (1) to prevent possible crossed readings and increase the reliability of the readings.

As can be seen in the figures, especially in Figure 2, the lateral walls (6) have the upper end thereof tilted downwards towards the front wall. Even when the base (2) is swivelled, this enables the box (4) to remain inside the reading area. Preferably, the lateral walls (6) and the front wall (5) are fixed.

In a possible embodiment, the box (4) arrives at the packing station preferably through at least one first conveyor belt, to which it is subsequently returned when the packing and/or unpacking operation has already been completed.

As previously described, the swivelling of the base (2) of the station enables the box (4) to be placed in an ergonomic position for the operator who is going to fill it with the corresponding items. Preferably, the swivelling is performed by means of lifting mechanisms (10) that are arranged in correspondence with one end of the base (2), such that when said lifting mechanisms (10) are activated, they lift the corresponding end of the base (2), which is at a height greater than an opposite end of said base that is held fixed and that is the end on which the base (2) swivels. The fixed end of the base (2) is arranged in correspondence with the horizontal axis (3). The lifting mechanism enables the tilt of the base (2) to be modified depending on the operation being performed at any given time.

Figures 1 to 3 represent the base (2) in a lifted position. Preferably, the tilt of the base (2) with respect to the horizontal is between 0° (i.e., it is horizontally arranged) and 70°. More preferably, the tilt of the base (2) is adjusted between 0° and 67.5°. The preferred tilt of the base (2) during the packing operations is 30° with respect to the horizontal. When all the items have been packed or unpacked, the lifting mechanisms (10) are activated again, lowering the end of the base (2) that had been lifted, until the base (2) is placed in a horizontal position. In an exemplary embodiment like the one shown in the figures, the lifting mechanism (10) comprises pneumatic cylinders.

The base (2) may additionally comprise a second conveyor belt (11) that enables the box (4) to be received, for example from the first conveyor belt, and to be moved closer to the fixed end of the base (2), to bring the box (4) closer to the operator so that he or she can work more comfortably. When the packing/unpacking operations have been completed, the lifting elements (10) bring the base (2) to the horizontal position and, by means of the second conveyor belt (11), moving in the opposite direction, the box (4) is moved away from the operator and moves towards the first conveyor belt and/or towards other means of transport (output transport line) that allow it to continue moving towards the next station.

Figures 1 to 3 also show that the horizontal axis (3) can also be driven by a motor (12) to control the movement (and the direction of movement) of the second conveyor belt (11).

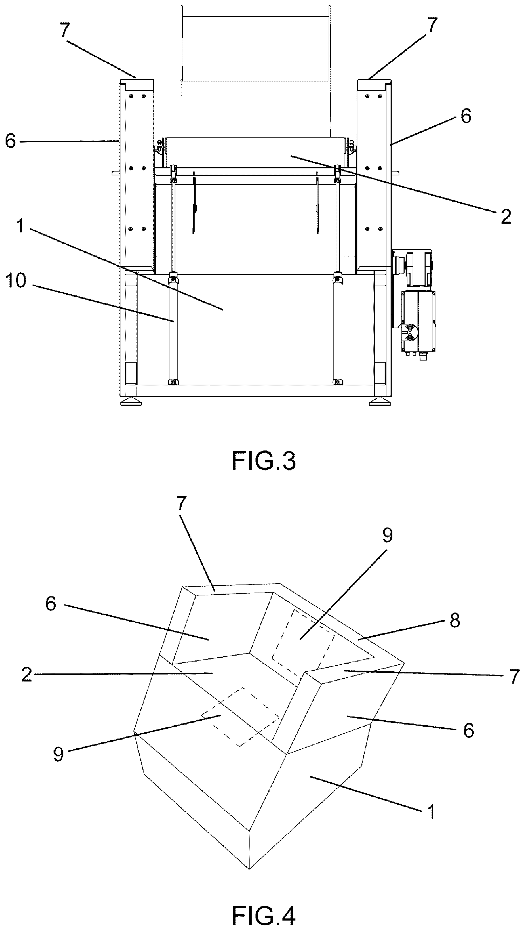

Figure 4 shows a schematic view of an exemplary embodiment of the packing station. In this case, the packing station comprises two antennas (9), one of them arranged on the front wall (5) and another antenna (9) arranged on the support (1), horizontally oriented. In a possible embodiment, the antenna (9) arranged on the front wall (5) is oriented with the same tilt as said front wall (5). In another possible embodiment, the antenna (9) arranged on the front wall (5) is vertically oriented (in the direction of the Z axis). In this exemplary embodiment, the power of the antennas is preferably 22 dB.

Preferably, the packing station comprises presence sensors configured to detect the presence of the box (4) at the base (2) of the station. When it is detected that there is a box (4) in the station, the lifting mechanisms (10) are activated to balance the base (2) (with the box (4) on it) until it is arranged with a predefined tilt, which is preferably 30° with respect to the horizontal. The tilt is adjustable and may depend, for example, on the size of the operator, the size of the box, the particular time of the packing operation and/or the size of the items to be packed. Due to said tilt, one of the technical problems of the state of the art is solved, which is the improvement of the operator's comfort during packing.

However, said tilted position of the box (4) and the fact that the operator is working in the reading area makes it difficult to read the RFID tags of the items, so it is essential that the workstation meets the requirements previously described about the position of the antennas, projections of the lateral walls and positioning of the shielding means. In this way, the technical problem of reading errors of the RFID tags of the items is solved by improving the ergonomics of the packing station.

The lateral walls (6) and the front wall (5) must be metallic to contain the signal from the antennas. Likewise, the fact that the lateral and front walls (6, 5) are metallic enables indirect rebounds to be created in the reading area. This enables reading the RFID tags of the items that cannot be read by the direct lobe of the antenna because they are inside the metal compartment in a "shadow" area of said lobe. The direct lobe is the main lobe of the antenna, i.e., the angular margin about the direction of maximum radiation. The shadows of the lobes are generated when there is an item arranged between an RFID tag to be read and the corresponding antenna with which a reading is being performed.

In an exemplary embodiment of the invention, the lateral projections (7) extend 10 cm towards the inside of the reading area and the front projection (8) extends 20 cm towards the inside of the reading area. Both the projections (7, 8) and the shielding means form part of a shielding assembly that makes it possible to prevent the signals from escaping from the reading area and causing reading errors and including in said reading products that are outside the box (4).

The front extension (8) is longer than the lateral extensions (7) since the lower portion of the reading area is especially critical for reading, since it is where the user is handling the items and where there is a lower height of the walls, enabling the signal to escape more easily.

The shielding means are elements that absorb signals, so they should only be arranged in the upper section of the walls (on the side of the walls oriented towards the reading area) to prevent them from shielding signals for reading products that are inside the box (4) and that must be read.

With the adequate power of the antennas (9) for signal emission, a delimited area is created that defines how far the waves for reading the tags reach (Figure 4), ensuring a delimited reading area in the packing station itself. If a larger number of products is to be read at the same time, said power can be increased. In an exemplary embodiment, to read up to 50 items it would be enough to use an antenna (9) power of 21 dB. In an exemplary embodiment, the power of the antennas (9) is between 18 dB and 21 dB, more preferably 21 dB.

The packing station may comprise a device capable of securing the front and rear flaps of larger boxes (4).

The packing station according to any one of the preceding claims, comprises a control module and at least one warning element such that if an erroneous item is detected in the reading area, the control module is configured to activate the warning element to emit an audible and/or visual signal.

In a possible embodiment of the invention, the visual warning elements are lights, which can have different colours depending on the type of warning that is emitted, for example when it detects that an erroneous item has been included in the box (4), when it detects that the box (4) is not correctly positioned, etc.

The packing station may also comprise a display through which the operator can act on the control module to select, for example, the tilt of the base (2) or the start/stop of the second conveyor belt (11). Said display is preferably arranged in the packing station in a position accessible to the operator wherein said position can be selected according to the requirements of the operator him or herself.

## Claims

1. A packing station **characterised in that** it comprises:
- a support (1) on which a base (2) is mounted, swivelling about a horizontal axis (3), on which a box (4) to be packed/unpacked is arranged;
- a metal front wall (5) and metal lateral walls (6) between which a reading area is generated where the base (2) is located;
- lateral extensions (7) that extend from an upper end of the lateral walls (6) towards the reading area and a front extension (8) that extends from an upper end of the front wall (5) towards said reading area;
- antennas (9) arranged on the support (1), vertically oriented, in correspondence with the front wall (5) and with the lateral walls (6);
- shielding means for shielding the signal of the antennas (9) arranged in an upper section of the front wall (5) and of the lateral walls (6).

2. The packing station according to any one of the preceding claims, wherein the antennas (9) work at a power of between 18 and 22 dB.

3. The packing station according to any one of the preceding claims, comprising lifting means (10) configured to control the swivelling of the base (2).

4. The packing station according to claim 3, wherein the lifting means (10) are linked to a moveable end of the base (2) such that said lifting means (10) move the moveable end of the base (2) up or down to control the tilt angle of the base (2).

5. The packing station according to claim 3 or 4, wherein the lifting means are pneumatic cylinders.

6. The packing station according to any one of the preceding claims, wherein the base (2) swivels between a horizontal position and a position wherein it is tilted at most by 70° with respect to the horizontal.

7. The packing station according to any one of the preceding claims, wherein the lateral walls (6) have a tilted upper end and the height of the lateral walls (6) and the tilt of said upper end are such that the box (4) is held in the reading area with any possible tilt of the base (2).

8. The packing station according to any one of the preceding claims, wherein the base (2) comprises a second conveyor belt (11) configured to move the box (4) away from or closer to the front wall (5) where the operator is located.

9. The packing station according to claim 8, wherein the conveyor belt (11) is controlled by a motor (12) linked to the horizontal axis (3).

10. The packing station according to any one of the preceding claims, wherein the lateral projections (7) extend 10 cm towards the inside of the reading area and the front projection (8) extends 20 cm towards the inside of the reading area.

11. The packing station according to any one of the preceding claims, comprising a control module and at least one warning element such that if an erroneous item is detected in the reading area, the control module is configured to activate the warning element to emit an audible and/or visual signal.
